(19) Europäisches Patentamt

European Patent Office

Office européen des brevets

(11) Veröffentlichungsnummer: **0 358 102**

**A2**

(12) **EUROPÄISCHE PATENTANMELDUNG**

(21) Anmeldenummer: 89116054.1

(22) Anmeldetag: 31.08.89

(51) Int. Cl.⁵: **G01J 4/04**

(30) Priorität: 07.09.88 DE 3830310

(43) Veröffentlichungstag der Anmeldung:
14.03.90 Patentblatt 90/11

(84) Benannte Vertragsstaaten:
**DE FR GB**

(71) Anmelder: **BODENSEEWERK PERKIN-ELMER GMBH**
**Alte Nussdorfer Strasse 15**
**D-7770 Uberlingen/Bodensee(DE)**

(72) Erfinder: **Tomoff, Toma**
**Lavendelweg 9**
**D-7770 Überlingen(DE)**

(74) Vertreter: **Weisse, Jürgen, Dipl.-Phys. et al**
**Patentanwälte Dipl.-Phys. Jürgen Weisse**
**Dipl.-Chem. Dr. Rudolf Wolgast Bökenbusch**
**41 Postfach 11 03 86**
**D-5620 Velbert 11 Langenberg(DE)**

(54) **Polarimeter.**

(57) Ein Polarimeter zur Messung der Drehung optisch aktiver Proben, enthält eine Lichtquelle (10), von welcher ein Meßlichtbündel (12) ausgeht, einen Polarisator (16) der um die Bündelachse des Meßlichtbündels (12) drehbar gelagert ist, eine Antriebsvorrichtung (24,28), durch welche eine hin- und hergehende Drehbewegung des Polarisators (16) erzeugbar ist, eine Probenküvette (18), einen Analysator (20) hinter der Probenküvette (18), einen von dem Meßlichtbündel (12) beaufschlagten, photoelektrischen Detektor (22) und Abgleichmittel, welche von dem Signal des photoelektrischen Detektors (22) gesteuert sind und durch welche der eine im wesentlichen gekreuzte Stellung von Polarisator (16) und Analysator (20) herstellbar ist. Die Abgleichmittel enthalten einen Schrittmotor (24) zur Verdrehung des Polarisators (16) mit einer von der hin- und hergehenden Drehbewegung (38) überlagerten Einstellbewegung, durch welche ein schneller Grobabgleich der Polarisationsebene des Meßlichtbündels (12) zu einer Nullage des Analysators (20) erfolgt. Feinbestimmungsmittel dienen zur Feinbestimmung des Winkels zwischen der Polarisationsebene des Analysators (20) in dessen Nullage und der Polarisationsebene des grob abgeglichenen Meßlichtbündels (12).

Fig. 1

Polarimeter

**Technisches Gebiet**

Die Erfindung betrifft ein Polarimeter zur Messung der Drehung optisch aktiver Proben, enthaltend

(a) eine Lichtquelle, von welcher ein Meßlichtbündel ausgeht,

(b) einen Polarisator, der im Strahlengang des Meßlichtbündels angeordnet und um die Bündelachse des Meßlichtbündels drehbar gelagert ist,

(c) eine Probenküvette im Strahlengang des Meßlichtbündels hinter dem Polarisator zur Aufnahme einer Probe, deren optische Drehung gemessen werden soll,

(d) einen Analysator im Strahlengang des Meßlichtbündels hinter der Probenküvette,

(e) einen von dem Meßlichtbündel beaufschlagten, photoelektrischen Detektor hinter dem Analysator,

(f) eine Antriebsvorrichtung mit einem Stellmotor, durch welche einmal eine hin- und hergehende Drehbewegung des Polarisators erzeugbar ist und durch welche zum anderen, gesteuert von dem Siganl des Detektors eine im wesentlichen gekreuzte Stellung von Polarisator und Analysator herstellbar ist.

**Zugrundeliegender Stand der Technik**

Durch die DE-B- 1 159 180 ist ein Polarimeter mit einem Polarisator, einem Analysator und einem hinter dem Analysator angeordneten Strahlungsempfänger bekannt, bei welchem zwischen Polarisator und Analysator eine optisch aktive Probe eingebracht und der Polarisator zu Drehschwingungen um die Bündelachse angeregt wird. Das Ausgangssignal des Strahlungsempfängers beaufschlagt phasenempfindliche Abgleichmittel, die bei einer Drehung der Polarisationsebene ein Nachdrehen des Analysators bewirken. Bei dem bekannten Polarimeter ist der Polarisator mit einem zylindrisch ausgebildeten, diametral magnetisierten Permanentmagneten verbunden. Der Permanentmagnet ist von konkav - zylindrischen Polflächen eines mit Wechselspannung erregten Elektromagneten umschlossen. Eine radiale Blattfeder fesselt den Permanentmagneten und den Polarisator an seine Ruhelage.

Bei der bekannten Antriebsvorrichtung schwingt somit der Polarisator sinusförmig mit der Netzfrequenz in der Nähe der Resonanz des von Polarisator, Permanentmagneten und Blattfeder gebildeten schwingungsfähigen Systems. Zum Abgleich wird der Analysator durch einen Stellmotor in Abhängigkeit von dem Signal des Detektors solange verdreht, bis der Analysator gekreuzt zu der gedrehten Polarisationsebene des Meßlichtbündels steht. Die Schwingung des Polarisators sorgt für ein Wechselsignal mit der Schwingungsfrequenz, nach welchem der Stellmotor gesteuert werden kann.

Es wird verlangt, die optische Drehung, die das Meßlichtbündel in der Probe erfährt, mit sehr hoher Genauigkeit (Milligrad) zu messen. Der Analysator muß daher sehr feinfühlig mit großer Untersetzung der Polarisationsebene des Meßlichtbündels nachgeführt werden. Andererseits können ziemlich große optische Drehungen auftreten, beispielsweise von 90°. Es erfordert dann relativ viel Zeit, bis der Analysator mit der entsprechend starken Untersetzung in die Abgleichstellung eingedreht ist. Die Meßdauer wird dadurch verlängert.

Durch das DE-U-66 04 638 ist ein Polarimeter bekannt, bei welchem längs einer optischen Achse folgende Bauteile angeordnet sind: eine Lichtquelle, ein Schwingpolarisator, der durch einen Stellmotor verdrehbar ist, eine wahlweise aus dem Strahlengang herausbewegbare Lambdaviertelplatte, eine Probenküvette, einen feststehenden Analysator, dessen Durchlaßrichtung senkrecht zur schnellen Achse der Lambdaviertelplatte liegt, und ein Detektor. Bei diesem Polarimeter führt der Polarisator die Abgleichbewegung aus, welcher die Schwingbewegung überlagert ist. Hinsichtlich Einstellzeit und Einstellgenauigkeit ergeben sich dabei die gleichen Probleme wie bei der DE-B-1 159 180.

Die JP-A-62 - 23 11 24 beschreibt ein Polarimeter, bei welchem der Polarisator in Schritten von jeweils 5° verdreht wird. Der Analysator wird bei jeder Stellung des Polarisators über jeweils 5°verdreht, um so diejenige Stellung des Analysators zu finden, bei welcher der auf den Detektor fallende Lichtstrom ein Minimum ist. Das so erhaltene Ausgangssignal wird gespeichert. Das Minimum der so gespeicherten Ausgangssignale wird ermittelt. Dann werden innerhalb des zugehörigen Intervalls Polarisator und Analysator in 0,1°-Schritten in die gefundene Stellung verdreht. Der Analysator wird festgehalten und der Polarisator wird schrittweise verstellt.

Dieses Verfahren ist recht kompliziert, zeitraubend und aufwendig.

Die DE-A-26 24 717 zeigt ein Polarimeter mit einem durch einen Stellmotor verdrehbaren Polarisator und einem stillstehenden Analysator zwischen Polarisator und Analysator sitzt ein Kristall, der durch Spannungen optisch aktiv gemacht werden kann. An diesem Kristall wird über eine Treiberschaltung eine Rechteckspannung angelegt. Das Detektorsignal wird synchron mit der Rechteckspannung demoduliert. Von dem so erhaltenen Gleichstromsignal wird der Stellmotor gesteuert, der den Polarisator in eine angenäherte Abgleichstellung verdreht. Ein vollständiger Abgleich ist mit dieser Demodulation jedoch noch nicht erreichbar. Aus diesem Grunde wird nach dem Abgleich die Restspannung verstärkt und angezeigt.

Die DE-C-26 56 131 zeigt die Verdrehung des Analysators bei einem Polarimeter mittels eines Schrittmotors.

## Offenbarung der Erfindung

Der Erfindung liegt die Aufgabe zugrunde, bei einem Polarimeter der eingangs definierten Art bei hoher Genauigkeit der Winkelmessung die Meßdauer zu verkürzen.

Erfindungsgemäß wird diese Aufgabe dadurch gelöst, daß

(g) durch die Verdrehung des Polarisators ein schneller Grobabgleich der Polarisationsebene des Meßlicht bündels zu einer Nullage des Analysators erfolgt, und

(h) Feinbestimmungsmittel vorgesehen sind zur Feinbestimmung des Winkels zwischen der Polarisationsebene des Analysators in dessen Nullage und der Polarisationsebene des grob abgeglichenen Meßlichtbündels.

Es wird somit der Polarisator nicht nur zur Erzeugung einer hin- und hergehenden Drehbewegung der Polarisationsebene benutzt sondern auch für eine Grobabgleichbewegung, durch welche die Polarisationsebene des Meßlichtbündels, die an dem Analysator unter Berücksichtigung der optischen Drehung in der Probe wirksam wird, wenigstens annähernd in eine Lage gebracht wird, die zur Polarisationsebene des im wesentlichen stationären Analysators gekreuzt ist. Der Polarisator führt dabei eine Bewegung aus, die sich aus einer stetigen Stellbewegung und einer dieser Stellbewegung überlagerten hin- und hergehenden Drehschwing-bewegung zusammensetzt. Ein solcher Grobab-gleich kann relativ schnell erfolgen. Ein Feinbestimmung des Winkels erfolgt durch gesonderte Feinbestimmungsmittel.

Die Feinbestimmungsmittel können den genauen Winkel aus dem nach Grobabgleich verbleibenden Wechselsignal für Rechts- und Linksdrehung durch Interpolation bestimmen. Die Feinbestimmung kann auch durch einen Feinabgleich erfolgen, bei dem der Analysator verdreht wird. Da der Analysator nach dem Grobabgleich nur noch um einen kleinen Winkel verdreht zu werden braucht, kann diese Verdrehung trotz der erforderlichen Untersetzung recht schnell erfolgen.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.

## Kurze Beschreibung der Zeichnungen

Fig.1 zeigt schematisch ein Polarimeter mit Grobabgleich durch den Polarisator, dessen Stellbewegung eine hin- und hergehende Bewegung überlagert ist.

Fig.2 zeigt den Winkel, auf den sich der Polarisator einstellt, mit der überlagerten Hin- und Herbewegung als Funktion der optischen Drehung der Probe.

Fig.3 zeigt die bei der Funktion des Polarisators auftretenden Signale des Detektors.

## Bevorzugte Ausführung der Erfindung

Von einer Lichtquelle 10 geht ein Meßlichtbündel 12 aus. Das Meßlichtbündel 12 tritt durch ein Filter 14, einen Polarisator 16, eine Küvette 18 und einen Analysator 20 und fällt auf einen Detektor 22. Der Detektor 22 ist von einem Photodetektor gebildet. Die Küvette 18 enthält eine Probe, deren optische Drehung gemessen werden soll.

Der Polarisator 16 ist von einem Schrittmotor 24 angetrieben.

Das Signal des Detektors 22 ist auf einen Analog-Digital-Wandler 26 geschaltet. Der Analog-Digital-Wandler 26 liefert ein digitales Signal, das auf einen Rechner 28 geschaltet ist. Der Analog-Digital-Wandler 26 ist mit einer hin- und hergehenden Bewegung des Polarisators 16 synchronisiert, die noch beschrieben wird. Das ist durch Leitung 30 angedeutet. Ein Anzeigegerät 32 liefert eine digitale Winkelanzeige für die optische Drehung der Polarisationsebene des Meßlichtbündels durch die Probe. Das beschriebene Polarimeter arbeitet wie folgt:

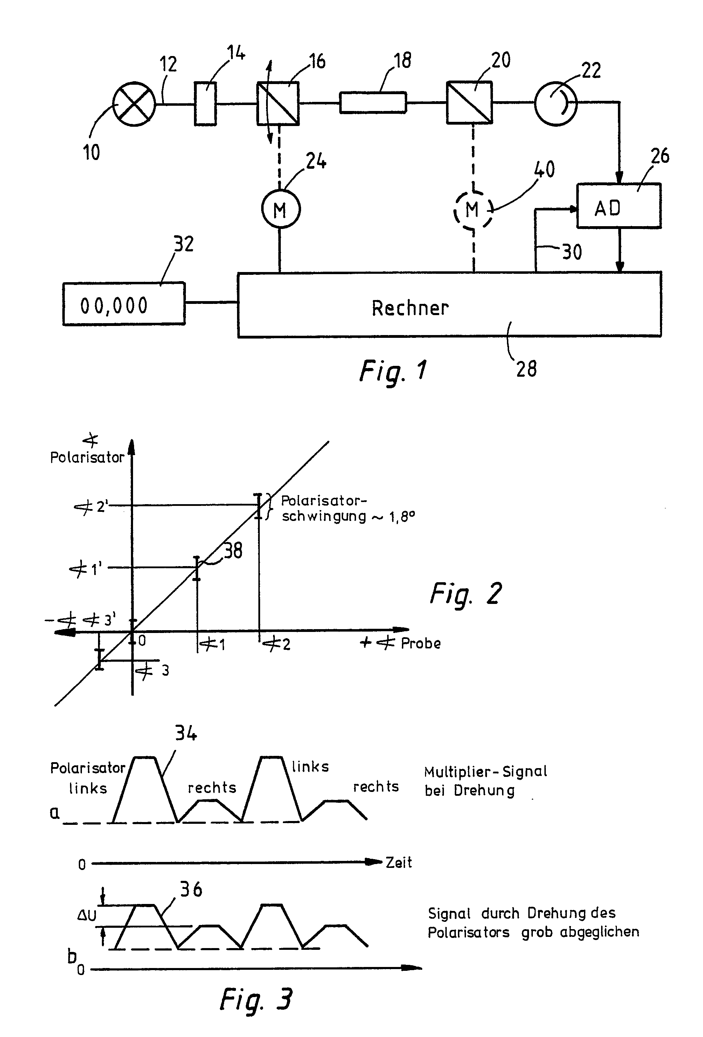

Durch den Schrittmotor 24 wird dem Polarisator einmal eine hin- und hergehende Drehbewegung nach einem etwa trapezförmigen Zeitverlauf erteilt. Es ergibt sich daraus ein Signal am Detektor 22, das etwa der Kurve 34 in der ersten Zeile von Fig.3 entspricht. Aus diesem Signal können ein Gleichspannungssignal für die automatische Verstärkungs regelung gewonnen werden. Außerdem ergeben sich zwei Signale entsprechend der am Detektor 22 wirksamen Bündelintensität bei Linksdrehung des Polarisators 16 und bei Rechtsdrehung des Polarisators. Aus diesen beiden Signalen, die sich durch die oben erwähnte Synchronisation des Analog-Digital-Wandlers ergeben, kann ein Abgleichsignal gewonnen werden. Durch dieses Abgleichsignal wird der Schrittmotor 24 über den Rechner zusätzlich so angesteuert, daß er den Polarisator 16 im Sinne eines Abgleichs verstellt. Der Polarisator stellt sich dadurch in eine Stellung ein, in welcher die durch den Polarisator 16 bestimmte Polarisationsebene des Meßlichtbündels 12 gedreht um die optische Drehung der Probe im wesentlichen senkrecht zu der Polarisationsebene des Analysators 20 steht.

Am Detektor ergibt sich dann ein Signal 36, wie es in der zweiten Zeile von Fig.3 dargestellt ist.

In Fig .2 ist dieser "Grobabgleich" schematisch dargestellt. Der Polarisator 16 stellt sich auf einen Winkel ein, bei welchem die Drehung des Polarisators 16 relativ zu dem Analysator 20 gerade die optische Drehung der Probe im wesentlichen kompensiert. Um diese Stellung führt der Polarisator 16, wie durch die Striche 38 angedeutet ist, eine hin- und hergehende Bewegung aus.

Aus dem dabei in der Nähe der Abgleichstellung erhaltenen Signal 36, dessen Amplitude U ein Maß für die Abweichung des Polarisators 16 von der zum Analysator 20 gekreuzten Stellung ist, kann eine Feinbestimmung des Winkels erfolgen.

Eine alternative Möglichkeit ist in Fig.1 gestrichelt eingezeichnet. Dort ist der Analysator 20 zusätzlich durch einen Schrittmotor 40 mit starker Untersetzung und daher sehr feinfühlig verstellbar. Nach dem Grobabgleich mittels des Polarisators 16 erfolgt ein Feinabgleich mittels des Analysators 20. Dazu wird das Signal 36 benutzt. Da nach dem Grobabgleich der Winkel zwischen der Polarisationsebene des Meßlichtbündels am Analysator 20 und der zur Polarisationsebene des Analysators 20 senkrechten Ebene schon sehr klein ist, kann auch der Feinabgleich trotz der starken Untersetzung sehr schnell erfolgen.

Konstruktiv kann die Antriebsvorrichtung zum Antrieb des Polarisators 16 nach Art der gleichzeitig eingereichten Patentanmeldung der gleichen Anmelderin "Antriebsvorrichtung zum Antreiben eines Schwingpolarisators (Anwaltsakte D 2906.00) ausgebildet sein.

**Ansprüche**

1. Polarimeter zur Messung der Drehung optisch aktiver Proben, enthaltend

(a) eine Lichtquelle (10), von welcher ein Meßlichtbündel (12) ausgeht,

(b) einen Polarisator (16), der im Strahlengang des Meßlichtbündels (12) angeordnet und um die Bündelachse des Meßlichtbündels (12) drehbar gelagert ist,

(c) eine Probenküvette (18) im Strahlengang des Meßlichtbündels (12) hinter dem Polarisator (16) zur Aufnahme einer Probe, deren optische Drehung gemessen werden soll,

(d) einen Analysator (20) im Strahlengang des Meßlichtbündels (12) hinter der Probenküvette (18),

(e) einen von dem Meßlichtbündel (12) beaufschlagten, photoelektrischen Detektor (22) hinter dem Analysator (20)

(f) eine Antriebsvorrichtung mit einem Stellmotor (24), durch welche einmal eine hin- und hergehende Drehbewegung des Polarisators (16) erzeugbar ist und durch welche zum anderen, gesteuert von dem Signal des Detektors eine im wesentlichen gekreuzte Stellung von Polarisator (16) und Analysator (20) herstellbar ist.
**dadurch gekennzeichnet, daß**

(g) durch die Verdrehung des Polarisators (16) ein schneller Grobabgleich der Polarisationsebene des Meßlichtbündels (12) zu einer Nullage des Analysators (20) erfolgt, und

(h) Feinbestimmungsmittel vorgesehen sind zur Feinbestimmung des Winkels zwischen der Polarisationsebene des Analysators (20) in dessen Nullage und der Polarisationsebene des grob abgeglichenen Meßlichtbündels (12) .

2. Polarimeter nach Anspruch 1, **dadurch gekennzeichnet, daß** der Stellmotor (24) ein Schrittmotor ist, der von einem Rechner (28) zur Erzeugung der Einstellbewegung und der überlagerten Drehbewegung ansteuerbar ist.

3. Polarimeter nach Anspruch 1 oder 2, **dadurch gekennzeichnet, daß**

(a) der Analysator (20) in fester Winkellage in bezug auf das Meßlichtbündel (12) angeordnet ist und

(b) die Feinbestimmungsmittel elektrische Interpolationsmittel enthalten, durch welche aus den Differenzen der bei der überlagerten Rechts- und Linksdrehung des Polarisators (16) am Detektor (22) erhaltenen Signale eine Feinbestimmung des Winkels erfolgt.

4. Polarimeter nach Anspruch 1 Oder 2, **dadurch gekennzeichnet, daß** die Feinbestimmungsmittel einen Stellmotor (40) enthalten, durch den der Analysator (20) nach dem Grobabgleich in Abhängigkeit von dem Detektorsignal in eine Abgleichstellung verdrehbar ist.

5. Polarimeter nach Anspruch 4, **dadurch gekennzeichnet, daß** der Analysator (20) durch den als Schrittmotor ausgebildeten Stellmotor (40) mit in kleineren Schritten verstellbar ist als der Polarisator (16) durch seinen Stellmotor (24) verstellt wird.

Fig. 1

Fig. 2

Polarisator

∡2'

Polarisatorschwingung ~ 1,8°

∡1'

38

-∡ ∡3'

0          ∡1        ∡2        + ∡ Probe

∡3

34

Polarisator        links                    Multiplier-Signal
links          rechts                         bei Drehung

a

0                                    Zeit

36

ΔU

Signal durch Drehung des
Polarisators grob abgeglichen

b   0

Fig. 3